# EUROPÄISCHE PATENTSCHRIFT

(11) **EP 1 520 609 B1**
(45) Veröffentlichungstag und Bekanntmachung des Hinweises auf die Patenterteilung: **30.03.2011**
(21) Anmeldenummer: 04022268.9
(22) Anmeldetag: 18.09.2004
(51) Int. Cl.: B01D 19/00

(54) **Verfahren und Vorrichtung zum Separieren und Abführen von Gasblasen aus Flüssigkeiten**
Method and apparatus for separating and eliminating gas bubbles from liquids
Procédé et dispositif de séparation et d' élimination des bulles de gaz des liquides

(30) Priorität: 30.09.2003 DE 10345818
(43) Veröffentlichungstag der Anmeldung: 06.04.2005
(73) Patentinhaber: Boehringer Ingelheim microParts GmbH, 44227 Dortmund (DE)
(72) Erfinder: Vesper, Christian, Dipl.-Ing., 44229 Dortmund (DE); Yu, Ying, Dr., 44225 Dortmund (DE); Peters, Ralf-Peter, Dr., 51467 Bergisch-Gladbach (DE); Stöters, Wolfgang, Dipl.-Ing., 45481 Mülheim (DE)
(74) Vertreter: Gesthuysen, von Rohr & Eggert

(56) Entgegenhaltungen:
- EP-A- 1 355 372
- DE-A- 4 219 966
- US-A- 5 989 318
- US-A1- 2002 056 675
- US-B1- 6 267 926
- US-B1- 6 402 821

## Beschreibung

Die Erfindung betrifft ein Verfahren zum Separieren und Abführen von Gasblasen aus einer strömenden Flüssigkeit, insbesondere in einem mikrofluidischen System, mit den Merkmalen des Oberbegriffs von Anspruch 1 sowie eine dementsprechende Vorrichtung mit den Merkmalen des Oberbegriffs von Anspruch 11.

Bei einem aus der Mikrofluidik bekannten Verfahren wird die Separierung von Gasblasen aus Flüssigkeiten dadurch erzielt, daß die die Gasblasen enthaltende wasserbasierte Flüssigkeit auf dem Weg durch eine Entlüftungsanordnung eine Entlüftungskammer durchströmt, die einen Wandungsabschnitt aus hydrophobem, für die Flüssigkeit nicht durchlässigen, für das Gas jedoch durchlässigen Gastrennmaterial aufweist. Mit diesem bekannten Verfahren kann eine strömende Flüssigkeit in einem mikrofluidischen System kontinuierlich (in diesem Sinne also unterbrechungsfrei) von Gasblasen befreit werden. Das bekannte Verfahren zum Separieren und Abführen von Gasblasen aus einer strömenden Flüssigkeit, also das kontinuierlich arbeitende Verfahren, erfordert eine Führung der Flüssigkeit im Raum in einer bestimmten Lage und ist in der Wirksamkeit noch verbesserungsfähig.

Anstelle wasserbasierter Flüssigkeiten kann man ähnliche Verfahren auch für ölbasierte Flüssigkeiten, möglicherweise auch für Alkohole oder Harze durchführen. Besondere Bedeutung hat das vorliegende Verfahren aber in der Tat für wasserbasierte Flüssigkeiten.

Die DE 19 59 679 PS offenbart eine Filteranordnung, insbesondere zum Beseitigen von Gas aus einem Flüssigkeitsstrom. Die Anordnung weist ein Gehäuse mit einem Einlaß und Auslaß für die Flüssigkeit auf. In dem Gehäuse ist zwischen dem Einlaß und Auslaß ein von der Flüssigkeit benetzbares Filterelement angeordnet, das für die Flüssigkeit, aber nicht für Gas durchlässig ist. Stromauf des Filterelements ist im Gehäuse ein poröses Element angeordnet, das flüssigkeitsabstoßend und für Gas aber nicht für Flüssigkeit durchlässig ist und das im wesentlichen flach ausgebildet ist. Mit Hilfe des porösen Elements kann Gas aus der Flüssigkeit stromauf des Filterelements abgeschieden und durch einen separaten Gasauslaß abgegeben werden. Nachteilig ist, daß die bekannte Filteranordnung nicht völlig lageunabhängig arbeitet. Vielmehr ist es erforderlich, daß das poröse Element zumindest im wesentlichen oberhalb der Flüssigkeit angeordnet ist, um eine möglichst effektive Gasabscheidung erreichen zu können.

Aus der vom Europäischen Patentamt durchgeführten Recherche RS 111294 zu der prioritätsbegründenden deutschen Patentanmeldung 103 45 818.2 sind folgende Druckschriften bekannt:

Die vorangemeldete, jedoch nachveröffentlichte EP 1 355 372 A2 und US 2003/194369 A1 offenbaren einen chemischen Reaktor der einen integrierten Flüssigkeits-Gas-Separator bildet und von einer für Wasserstoff durchlässigen hydrophoben Membran umgeben ist.

Die US 6,402,821 B1 offenbart eine lageabhängige Filtereinheit zur Entfernung von Verunreinigungen und Blasen aus einer Entwicklungslösung mit einem nur oberseitigen Blasenfilter.

Die DE 42 19 966 A1, die den Ausgangspunkt der vorliegenden Erfindung bildet, offenbart einen rotationssymmetrisch aufgebauten Filter für Fluide mit einem hydrophilen Flachfilter und einen ringförmigen, hydrophoben Flachfilter zur Selbstentlüftung, wobei beide Filter axial hintereinander angeordnet sind und durchströmt werden.

Die US 2002/0056675 A1 offenbart einen lageabhängigen Gasentlüftungsfilteraufbau mit einer lose in einen Kanal hängenden Hohlfasermembran, an die sich ein hydrophober Filter anschließt.

Die US 5,989,318 A betrifft einen Wasserabscheider zur Separation eines Zwei-Phasen-Stroms in eine Flüssigwasserkomponente und eine Gaskomponente. Zur Separation werden ein innerer hydrophober Filter und ein äußerer hydrophiler Filter eingesetzt, die hohlzylindrisch ausgebildet und konzentrisch angeordnet sind, wobei nur Gas radial nach innen durch den hydrophoben Filter abgeschieden werden kann. Dies eignet sich nicht für eine lageunabhängige Gasabscheidung.

Die US 6,267,926 B1 betrifft ein Verfahren und eine Vorrichtung zur Abscheidung von Gasen aus einer Flüssigkeit, die zunächst durch einen Filter und dann parallel durch hydrophobe, mikroporöse Membranröhren geführt wird, wobei mittels Unterdruck Gasblasen aus der Flüssigkeit durch die Membranwandungen hindurch separiert werden. Dies ist aufwendig.

Der Erfindung liegt die Aufgabe zugrunde, ein Verfahren und eine Vorrichtung zum Separieren und Abführen von Gasblasen aus einer strömenden Flüssigkeit anzugeben, so daß die Abscheidung von Gasblasen aus der Flüssigkeit lageunabhängig auf sehr wirksame und einfache Weise erfolgen kann.

Die obige Aufgabe wird durch ein Verfahren gemäß Anspruch 1 oder eine Vorrichtung gemäß Anspruch 11 gelöst. Vorteilhafte Weiterbildungen sind Gegenstand der Unteransprüche.

Das vorschlagsgemäße Verfahren sieht vor, daß der Strömungsweg der Flüssigkeit zwischen der Eintrittsstelle und der Entlüftungskammer und zwischen der Entlüftungskammer und der Austrittsstelle umgelenkt wird, so daß die Flüssigkeit von der Achsrichtung zunächst radial nach außen in die Entlüftungskammer und dann radial nach innen und zurück in die Achsrichtung umgelenkt wird. Vorrichtungsmäßig ist insbesondere die vorgenannte Umlenkung sehr einfach dadurch realisierbar, daß die Entlüftungskammer zumindest im wesentlichen ringförmig ausgebildet ist. So kann das Gas zumindest weitestgehend lageunabhängig aus der Flüssigkeit durch das Gastrennmaterial hindurch separiert werden.

Das bevorzugte Verfahren basiert auf einer Kombination von die Flüssigkeit abstoßenden, die Flüssigkeit aufnehmenden sowie fluidisch undurchlässigen Materialien, die in bestimmter Art und Weise relativ zueinander angeordnet sind und in bestimmter Weise von der strömenden, Gasblasen enthaltenen Flüssigkeit berührt werden. Insbesondere gilt dies für wasserbasierte Flüssigkeiten mit hydrophoben, hydrophilen und fluidisch undurchlässigen Materialien.

In der Entlüftungskammer, die erfindungsgemäß von der Flüssigkeit durchströmt wird, ergibt sich in einer ersten Variante ein geringfügiger Rückstau aufgrund des an die Entlüftungskammer anschließenden Austrittsfilters aus einem die Flüssigkeit aufnehmenden, Poren oder kleine Kanäle bildenden Material. Die Gasblasen können aus der Flüssigkeit durch die Wandung oder den Wandungsabschnitt aus Gastrennmaterial aus der Entlüftungskammer abgeführt werden, wobei dieses Material einen Durchtritt von Flüssigkeit eben verhindert. Aufgrund des in der Entlüftungskammer herrschenden, durch den Austrittsfilter noch erhöhten Druckes gegenüber dem Umgebungsdruck ist die Abführung der Gasblasen vergleichsweise effektiv. Außerdem werden Gasblasen auch noch aus dem Austrittsfilter selbst jedenfalls dann nach außen gedrängt, wenn sich bereits am Austrittsfilter ein Wandungsabschnitt aus Gastrennmaterial befindet. Die in den Austrittsfilter eingesaugte Flüssigkeit führt zum Herausdrängen der Gasblasen wenn diese überhaupt noch in den Austrittsfilter eingetreten sein sollten.

In einer weiteren Variante wird zunächst ein Eintrittsfilter ebenfalls aus einem die Flüssigkeit aufnehmenden, Poren oder kleine Kanäle bildenden Material von der Flüssigkeit durchströmt. Dieser Eintrittsfilter saugt sich aufgrund seiner Eigenschaften ebenfalls mit Flüssigkeit voll und erhöht die Wirksamkeit der Gasabscheidung jedenfalls dann, wenn er durch zumindest eine Wandung oder einen Wandungsabschnitt aus Gastrennmaterial begrenzt wird. Gasblasen können sodann auf direktem Wege aus dem Eintrittfilter nach außen abgeführt werden.

Das vorzugsweise Kapillaren bildende Material des Eintrittsfilters und des Austrittsfilters trägt bei zu einer Lageunempfindlichkeit des gesamten Systems, das somit keine definierte Einbauposition und Betriebsposition benötigt. Das gilt insbesondere dann, wenn eine Entlüftungskammer vorgesehen ist, die radial außerhalb und umlaufend um den Austrittsfilter und/oder den Eintrittsfilter angeordnet ist. Eine solche Entlüftungskammer kann ringförmig, insbesondere kreisringförmig ausgeführt sein. Die Angabe schließt aber auch andere Formen wie quadratische oder mehreckige Ringverläufe der Entlüftungskammer ein. Damit eignet sich dieses Verfahren in besonderer Weise für mikrofluidische Systeme beispielsweise auch in von Benutzern mitgeführten portablen Einrichtungen. Das erfindungsgemäße Verfahren eignet sich in besonderer Weise für eine Einfügung in ein vorhandenes, insbesondere mikrofluidisches System.

Die erfindungsgemäße Vorrichtung ermöglicht es, lageunabhängig Gasblasen aus der Flüssigkeit zu separieren und abzuführen. Die Vorrichtung kann in eine die Flüssigkeit führende Leitungsanordnung eingefügt werden und unterbrechungsfrei arbeiten. Die erfindungsgemäße Vorrichtung arbeitet passiv, benötigt also keine zusätzlich von außen zugeführte Energie. Aufgrund der geschickten Wahl der Funktionselemente ergibt sich ein vergleichsweise geringer Druckabfall beim Durchströmen der Flüssigkeit.

Im Grundsatz sind das erfindungsgemäße Verfahren und die erfindungsgemäße Vorrichtung für makrofluidische und mikrofluidische Systeme einsetzbar. Besondere Bedeutung allerdings haben Verfahren und Vorrichtung bei mikrofluidischen Systemen in Abmessungen zwischen einigen 10 µm und einigen 100 µm.

In Abhängigkeit von der Art der Flüssigkeit, der Zusammensetzung der Flüssigkeit, der Arbeitstemperatur etc. sowie der vorliegenden Abmessungen im System, insbesondere im mikrofluidischen System, sind die Viskosität der betroffenen Flüssigkeit ebenso zu bestimmen wie die Strömungsgeschwindigkeit im System. Diese Parameter können werkstoffabhängig und bedingungsabhängig in weiten Bereichen liegen.

Die eingesetzten Filter haben nicht nur die Funktion der Separation aufgrund des die Flüssigkeit aufnehmenden Materials, sondern auch die Funktion von Partikelfiltern.

Im folgenden wird nun die Erfindung anhand einer lediglich Ausführungsbeispiele darstellenden Zeichnung näher erläutert. In der Zeichnung zeigt
- Fig. 1: eine zunächst das Grundprinzip der Gasblasenabscheidung erläutern- de schematische Zeichnung;
- Fig. 2: ein erstes Ausführungsbeispiel einer erfindungsgemäßen Vorrichtung im Schnitt;
- Fig. 3: ein zweites Ausführungsbeispiel einer erfindungsgemäßen Vorrich- tung im Schnitt;
- Fig. 4: ein drittes Ausführungsbeispiel einer erfindungsgemäßen Vorrich- tung;
- Fig. 5: ein viertes Ausführungsbeispiel einer erfindungsgemäßen Vorrich- tung.

In den Figuren werden für gleiche oder ähnliche Komponenten und Bauteile mit gleichen oder ähnlichen Eigenschaften oder Vorteilen die gleichen Bezugszeichen verwendet.

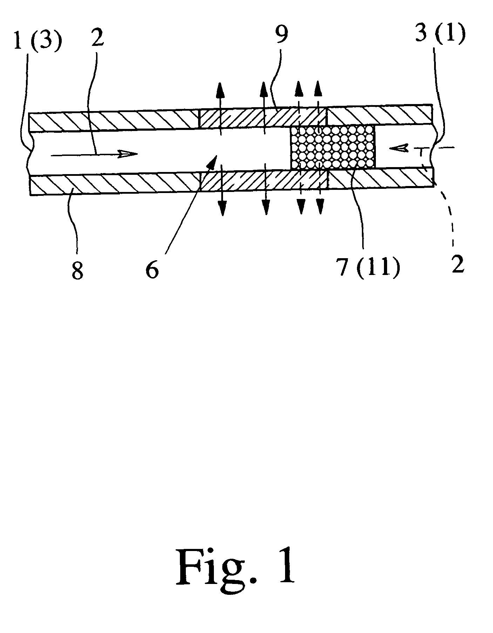

Fig. 1 zeigt das Grundprinzip der Gasabscheidung. Die dort dargestellte Vorrichtung soll zunächst anhand der Strömungsrichtung der Flüssigkeit, die den durchgezogenen Linien mit dem linksstehenden Pfeil angedeutet ist, erläutert werden.

Die Vorrichtung dient zum Separieren und Abführen von Gasblasen aus einer strömenden Flüssigkeit, insbesondere in einem mikrofluidischen System. Vorgesehen ist eine Eintrittsstelle 1 für den Eintritt von Gasblasen enthaltender Flüssigkeit 2 sowie eine Austrittsstelle 3 für den Austritt dieser Flüssigkeit 2 aus der Vorrichtung.

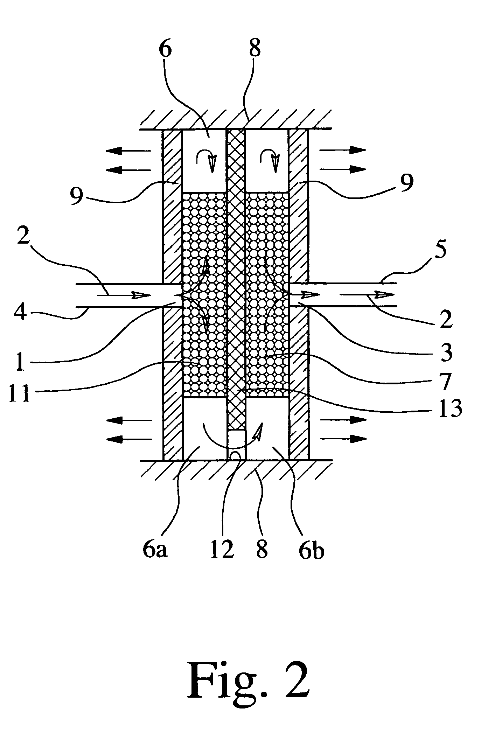

Angedeutet ist in Fig. 2 eine Anschlußleitung 4 die zur Eintrittsstelle 1 führt, ebenso wie eine Anschlußleitung 5, die von der Austrittsstelle 3 wegführt. Es kann sich dabei um Schläuche, starre Leitungen, Strömungskanäle in einem Chip etc. handeln. Wichtig ist, daß die die Gasblasen enthaltende Flüssigkeit 2 auf dem Weg von der Eintrittsstelle 1 zu der Austrittsstelle 3 zunächst eine Entlüftungskammer 6 durchströmt, die in Strömungsrichtung der Flüssigkeit 2 hinter der Eintrittstelle 1 angeordnet ist. An die Entlüftungskammer 6 schließt sich ein Austrittsfilter 7 an, der anschließend von der Flüssigkeit 2 durchströmt wird. Die Strömung der Flüssigkeit 2 an der Eintrittsstelle 1 und an der Austrittsstelle 3 verläuft zumindest im wesentlichen in die gleiche Achsrichtung, auch wenn die Eintrittsstelle 1 und die Austrittsstelle 3 gegeneinander versetzt sein können, insbesondere also ggf. quer zur Achsrichtung.

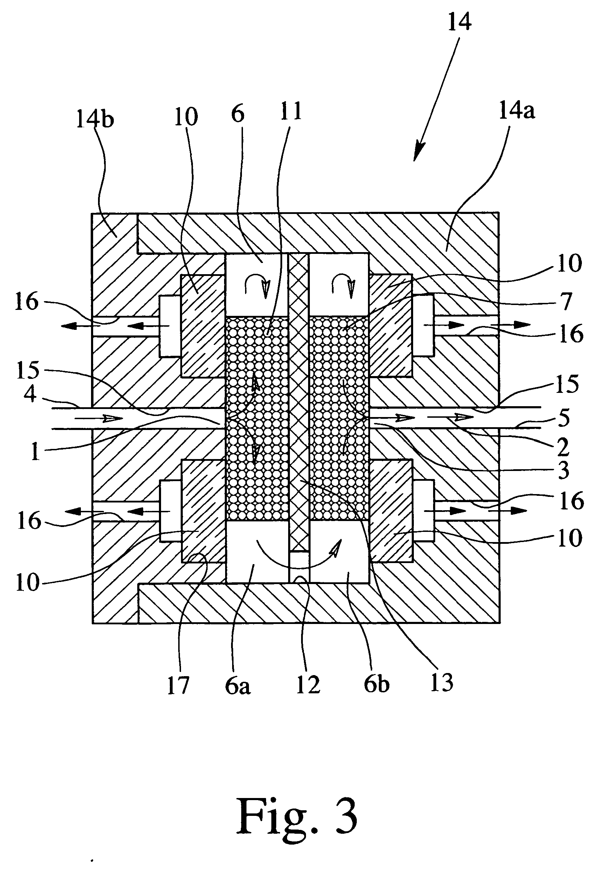

Fig. 1 zeigt, daß beim erläuternden Grundprinzip die Entlüftungskammer 6 zunächst durch axial verlaufende äußere Wandungen 8 begrenzt ist, die aus weder für Flüssigkeit 2 noch für Gas durchlässigem Material bestehen. Weiter ist aber vorgesehen, daß die Entlüftungskammer 6 von zumindest einer Wandung 9 (Fig. 1, 2) oder einem Wandungsabschnitt 10 (Fig. 3) begrenzt ist, die bzw. der aus einem die Flüssigkeit abstoßenden, für die Flüssigkeit 2 nicht durchlässigen, für das in der Flüssigkeit 2 mitgeführte Gas jedoch durchlässigen Gastrennmaterial besteht.

Der Austrittsfilter 7 hingegen besteht aus einem die Flüssigkeit 2 aufnehmenden, Poren oder kleine Kanäle bildenden Material dergestalt, daß die dort durchströmende Flüssigkeit 2 nur einen geringfügigen Druckabfall erfährt.

Wichtig ist, daß der Förderdruck der Flüssigkeit 2, der Durchflußwiderstand der Wandung 9 der Entlüftungskammer 6 aus Gastrennmaterial für das Gas und die Speicherwirkung des Austrittsfilters 7 aus einem die Flüssigkeit aufnehmenden Material für die Flüssigkeit 2 so aufeinander abgestimmt sind, daß die in der Flüssigkeit 2 enthaltenen Gasblasen zu einem erheblichen Anteil durch die Wandung 9 nach außen entweichen.

In Fig. 1 ist das durch die dortigen Pfeile angedeutet. Man erkennt die "offenen" Pfeile, die die Strömung der Flüssigkeit 2 darstellen. Die "geschlossenen" Pfeile stellen die Strömung des austretenden Gases dar, das über die Wandungen 9, die hier die Entlüftungskammer 6 in Achsrichtung vollflächig begrenzen, austreten können.

Bei der in Fig. 1 in durchgezogenen Linien dargestellten ersten Variante wirkt der Austrittsfilter 7 geringfügig druckerhöhend für das Innere der Entlüftungskammer 6, so daß die Abscheidung der Gasblasen effektiver wird. Ebenso werden die Gasblasen 9, die noch mit Flüssigkeit 2 in den Austrittsfilter 7 hineingerissen worden sein sollten, aus diesem radial herausgedrängt durch den dortigen Abschnitt der Wandung 9, weil der Austrittsfilter 7 eben aus einem die Flüssigkeit aufnehmenden Material besteht.

Fig. 1 zeigt eine zweite Variante, bei der Eintrittsstelle 1 und Austrittsstelle 3 vertauscht sind, das ist durch Klammern bei den Bezugszeichen angedeutet. Hier sind die Strömungen mit gestrichelten Pfeilen dargestellt. Der Filter wirkt hier als Eintrittsfilter 11 und erhöht die Abscheidequote für Gasblasen bereits dadurch, daß schon hier im Eintrittsfilter 11 eine Abscheidung durch die Wandung 9 radial nach außen erfolgt, wiederum aufgrund der die Flüssigkeit aufnehmenden Eigenschaften des Materials der Eintrittsfilters 11.

Nach dem Grundprinzip, das in Fig. 1 dargestellt ist, zeigt nun Fig. 2 ein erstes, auch noch eher schematisches Ausführungsbeispiel gemäß der vorliegenden Erfindung. Gleiche Bezugszeichen wie zuvor sind verwendet worden.

Das in Fig. 2 dargestellte System zeigt, daß zwischen der Eintrittstelle 1 und der Entlüftungskammer 6 ein Eintrittsfilter 11 angeordnet ist, durch das der Strömungsweg der Flüssigkeit 2 führt, und daß der Eintrittsfilter 11 aus einem die Flüssigkeit aufnehmenden, Poren oder kleine Kanäle bildenden Material besteht dergestalt, daß die Flüssigkeit 2 beim Durchströmen des Eintrittsfilters 11 nur einen geringfügigen Druckabfall erfährt. Die Kombination von Eintrittsfilter 11 und Austrittsfilter 7 führt zu einer optimalen Ausbildung der dazwischen realisierten, vorzugsweise ringförmigen Entlüftungskammer 6. Vorzugsweise verläuft die Achsrichtung quer, insbesondere senkrecht, zur Radialebene der Entlüftungskammer 6.

Das in Fig. 2 dargestellte Ausführungsbeispiel macht im übrigen ebenfalls deutlich, daß die Wandung 9 der Entlüftungskammer 6 aus Gastrennmaterial sich bis in den Bereich des Austrittsfilters 7 und/oder in den Bereich des Eintrittsfilters 11 und/oder vorzugsweise bis in radial äußere Bereiche der Entlüftungskammer 6 erstreckt. Das dargestellte Ausführungsbeispiel zeigt nämlich die Wandungen 9 vollflächig einerseits die Eintrittsstelle 1, andererseits die Austrittstelle 3 einschließend. Dadurch kann bereits beim Durchströmen des Austrittsfilters 7 und des Eintrittsfilters 11 Gas durch die entsprechende Wandung 9 aus der Flüssigkeit entweichen. Fig. 3 zeigt das ähnlich für dort realisierte Wandungsabschnitte 10.

Fig. 2 macht deutlich, daß es mit dem erfindungsgemäßen Verfahren bzw. der dargestellten Vorrichtung möglich ist, eine vorhandene Leitungsführung für die Flüssigkeit 2, angedeutet durch die Leitungen 4, 5, beizubehalten und die Vorrichtung einfach "in-line" anzuordnen.

Das in Fig. 2 dargestellte und insoweit bevorzugte Ausführungsbeispiel zeichnet sich weiter besonders dadurch aus, daß der Strömungsweg der Flüssigkeit 2 zwischen der Eintrittsstelle 1 und der Entlüftungskammer 6, nämlich hier im Eintrittsfilter 11, sowie zwischen der Entlüftungskammer 6 und der Austrittsstelle 3, im dargestellten Ausführungsbeispiel im Austrittsfilter 7, umgelenkt wird. Dazu ist im einzelnen vorgesehen, daß die Entlüftungskammer 6 bezüglich der Eintrittsstelle 1 radial außerhalb und umlaufend angeordnet ist, im dargestellten Ausführungsbeispiel konkret nämlich, daß die Entlüftungskammer 6 den Austrittsfilter 7 und den Einrittsfilter 11 ringförmig, insbesondere kreisförmig umgibt.

Man erkennt in Fig. 2 die Umlenkung um jeweils etwa 90° und zwar dergestalt, daß die Umlenkung von der Achsrichtung aus radial nach außen in einer Mehrzahl von Richtungen, insbesondere strahlenförmig, (bei 11) oder umgekehrt von radial strahlenförmig in die Achsrichtung (bei 7) erfolgt. Die Strömung der Flüssigkeit 2 im die Flüssigkeit 2 aufnehmenden Material des Austrittsfilter 7 und des Eintrittsfilters 11 wird verzögert und es ergibt sich eine Sammelwirkung für Gasblasen in der Entlüftungskammer 6.

Die dargestellte Konstruktion macht die erfindungsgemäße Ausführung komplett lageunabhängig. Die auftretenden Kapillarkräfte im Austrittsfilter 7 und, so vorhanden, im Eintrittsfilter 11 machen eine Nutzung des ansonsten bei Vorrichtungen der in Rede stehenden Art erforderlichen Schwerkraftprinzips überflüssig.

Das in Fig. 2 dargestellte und insoweit bevorzugte Ausführungsbeispiel zeigt im übrigen weiter, daß zwischen der Eintrittsstelle 1 und der Austrittsstelle 3 zwei in Strömungsrichtung der Flüssigkeit 2 hintereinander angeordnete Entlüftungskammern 6a, 6b vorgesehen sind, die über eine lediglich eine Durchtrittsöffnung 12 oder einige Durchtrittsöffnungen aufweisende Trennschicht 13 voneinander getrennt sind. Man erkennt in Fig. 2 bei der Darstellung dieses Grundprinzips wie die unten erkennbare einzige Durchtrittsöffnung 12 die Flüssigkeitsströmung im Ringraum der Entlüftungskammer 6 zwangsweise führt, so daß eine optimale Umlenkung der Flüssigkeit 2 und eine dementsprechend optimale Gasabtrennung erfolgt. Allerdings ist festzuhalten, daß eine Umlenkung der Flüssigkeit 2 in der Entlüftungskammer 6 nicht zwingend erforderlich ist, um das erfindungsgemäße System zu realisieren. Sie unterstützt allerdings die Wirksamkeit der Gasabscheidung.

Bei dem in Fig. 3 dargestellten, konkreten Ausführungsbeispiel einer erfindungsgemäßen Vorrichtung ist eine etwas andere Konstruktion realisiert als bei dem in Fig. 2 dargestellten Grundprinzip. Hier ist nämlich vorgesehen, daß die Vorrichtung ein Gehäuse 14, vorzugsweise aus Gehäusekorpus 14a und Gehäusedeckel 14b, aus für Flüssigkeit und Gas undurchlässigem Material aufweist, daß im Gehäuse 14 Flüssigkeits-Strömungskanäle 15 und Gas-Strömungskanäle 16 ausgebildet sind und daß Wandungsabschnitte 10 aus Gastrennmaterial als Einsätze an entsprechenden Stellen des Gehäuses 14 ausgeführt sind. Die in Fig. 1 und 2 dargestellte prinzipielle Anordnung hat Außenwandungen 8, die beispielsweise in einem mikrofluidischen System Kanalwände eines eingelassenen Kanals sein können. Demgegenüber ist bei dem Ausführungsbeispiel in Fig. 3 ein separates Gehäuse 14 vorgesehen. Ferner ist hier vorgesehen, daß die Wandungsabschnitte 10 zur Bildung der Gasabtrennbereiche in Ausnehmungen 17 in dem Gehäusekorpus 14a und dem Gehäusedeckel 14b bündig angeordnet sind. Die "Sandwichanordnung" des Grundprinzips aus Fig. 2 kann sich also bei der Ausführungsform gemäß Fig. 3 wiederholen. Hat man eine mikrofluidische Anordnung mit sehr kleinen Abmessungen, so empfiehlt es sich, daß die Teile aus einem die Flüssigkeit abstoßenden Material und/oder die Teile aus einem die Flüssigkeit aufnehmenden Material als Membranen ausgeführt sind.

Für hydrophobe Membranen in einem mikrofluidischen System kommt beispielsweise ein Acryl-Copolymer in Frage, das durch eine spezielle Behandlung die erforderlichen hydrophoben Eigenschaften erhalten hat. Typische Dicken liegen dabei zwischen ca. 100 µm und ca. 300 µm, insbesondere zwischen ca. 200 µm und ca. 250 µm. Die Porengrößen variieren vorzugsweise im Bereich von 0,1 µm bis 10,0 µm.

Hydrophile Membranen sind beispielsweise herstellbar aus hydrophilem Polyether-Sulfon-Material. Die Abmessungen sind sowohl bei Dicke als auch Porengröße vergleichbar mit dem Bereich, der zuvor bereits für das hydrophobe Material angegeben worden ist. Als hydrophile Membran kann auch ein Acryl-Polymer-Material genutzt werden. Durch eine hydrophile Ausstattung des Materials ergeben sich die gewünschten Eigenschaften für wasserbasierte Flüssigkeiten. Die Dicke für eine hydrophile Membran aus Polyether-Sulfon-Material beträgt ca. 100 µm bis ca. 160 µm. Die Dicke für eine Membran aus Acryl-Polymer-Material beträgt 100 µm bis ca. 270 µm. Für die konkrete Ausbildung einer Vorrichtung können z. B. zwei aufeinanderliegende hydrophile Membranen jeweils den Eintrittsfilter bzw. den Austrittsfilter bilden.

Um eine Vorstellung eines bevorzugten Ausführungsbeispiels in maßlicher Hinsicht zu haben, kann man für Fig. 2 beispielsweise annehmen, daß der Durchmesser der Gesamtanordnung in radialer Richtung zwischen etwa 3 mm und etwa 8 mm, vorzugsweise bei etwa 5 mm liegt, während die Dicke der "Sandwichanordnung" in Achsrichtung zwischen etwa 2 mm und etwa 8 mm, vorzugsweise bei etwa 3 mm liegt. Der Querschnitt der Eintrittsstelle und der der Austrittsstelle liegt in einem mikrofluidischen System meist deutlich unter 0,5 mm.

Bereits im allgemeinen Teil der Beschreibung ist darauf hingewiesen worden, daß sich die Parameter des Betriebs einer Vorrichtung der in Rede stehenden Art, insbesondere Viskosität und Strömungsgeschwindigkeit der Flüssigkeit, in weiten Bereichen abhängig von anderen Parametern einstellen lassen, was durch entsprechende Versuche herausgefunden werden kann.

Hinsichtlich der konstruktiven Realisierung der Vorrichtung lassen sich übliche Herstellungs- und Verbindungstechniken insbesondere der Mikrostrukturtechnik einsetzen. Besonders interessant ist für eine Verbindung neben einem präzisen Kleben ein Ultraschallverschweißen der einzelnen Bestandteile, insbesondere bei einem wie zuvor erläutert sandwichartig aufgebauten System.

Ungeachtet der zuvor gegebenen Angaben für ein spezielles mikrofluidisches System ist das Grundprinzip der Erfindung auch im makrofluidischen Bereich, also bei deutlich größeren Abmessungen anwendbar.

Für die Filter 7, 11 kann man im übrigen auch als interessantes Material vorsehen ein Sintermaterial aus Keramik, Glasfritten oder andere Mikrostrukturmaterialien, wie auch Kunststoff-Sintermaterial.

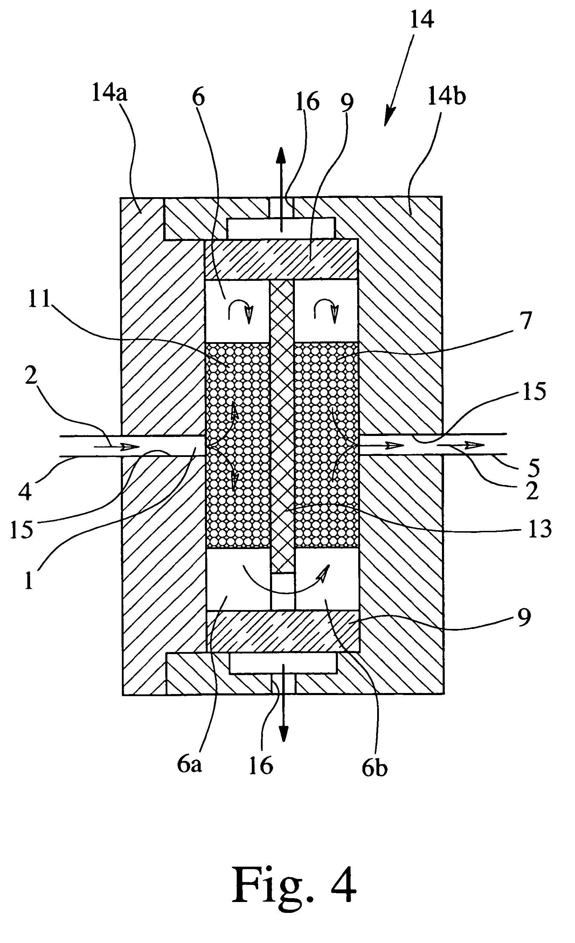

Das in Fig. 4 dargestellte weitere Ausführungsbeispiel stimmt im Prinzip mit dem Ausführungsbeispiel aus Fig. 3 weitgehend überein. Hier allerdings erfolgt eine Abführung des Gases aus der Flüssigkeit 2 radial, nicht axial über eine als Ringbund ausgeführte gasdurchlässige Wandung 9, die zwischen Gehäusekorpus 14a und Gehäusedeckel 14b eingesetzt ist.

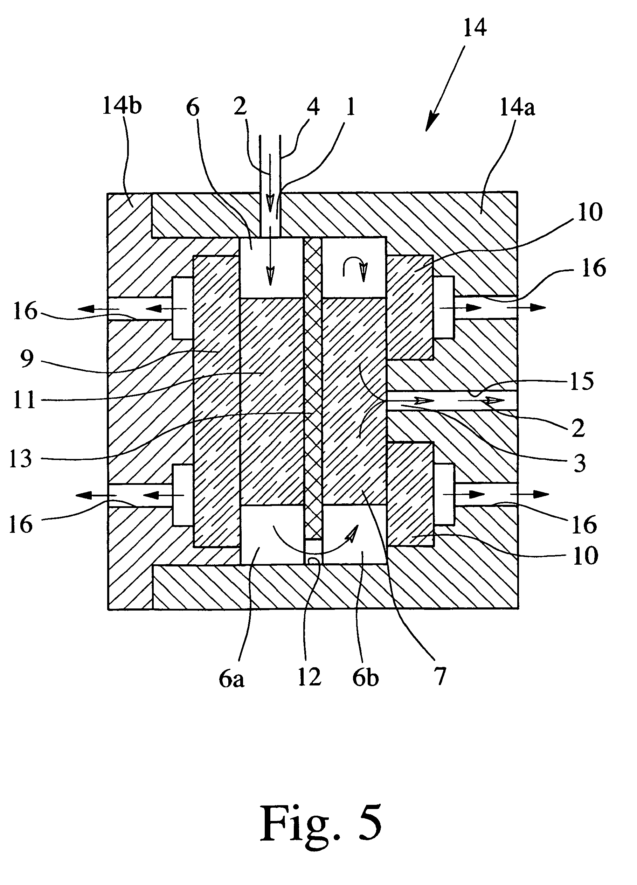

Schließlich zeigt die in Fig. 5 dargestellte Ausführungsform eine radiale Zuführung der Flüssigkeit 2 an der Eintrittsstelle 1, hingegen eine axiale Abführung der Flüssigkeit 2 an der Austrittsstelle 3. Hier ist der Eintrittsfilter 11 eher Abstandshalter zur Definition der Entlüftungskammer 6. Er könnte bei besonders kompakter Ausführung ggf. sogar ganz entfallen. Die Wandung 9 aus einem die Flüssigkeit abstoßenden Material erstreckt sich parallel zum Eintrittsfilter 11 und führt zu einer Abführung des Gases durch entsprechende Strömungskanäle 16.

Betrachtet man beispielsweise das Ausführungsbeispiel aus Fig. 3, so kann man im Zusammenhang folgende Funktionsweise erläutern:

Die zu entgasende, hier wasserbasierte Flüssigkeit 2 wird durch die Anschlußleitung 4 der Eintrittsstelle 1 zugeführt und durchströmt zunächst die den Eintrittsfilter 11 bildende hydrophile Membran mit definierter Porengröße. Danach bewirkt eine für die Flüssigkeit 2 undurchlässige, die Trennschicht 13 bildende Membran eine Richtungsumkehr des Flüssigkeitsstroms etwa senkrecht zur ursprünglichen Strömungsrichtung. Die Flüssigkeit 2 tritt sodann seitlich in die Entlüftungskammer 6 ein, die ringförmig um die den Eintrittsfilter 11 bildende hydrophile Membran angeordnet ist. Durch eine kleine Durchtrittsöffnung 12 in der die Trennschicht 13 bildenden Membran strömt die Flüssigkeit 2 aus der ersten Entlüftungskammer 6a in die anschließende Entlüftungskammer 6b. Von dort aus strömt die Flüssigkeit 2 radial durch die den Austrittsfilter 7 bildende hydrophile Membran, wird innerhalb dieser Membran wiederum etwa rechtwinklig umgelenkt und verläßt an der Austrittsstelle 3 die Vorrichtung. Im Bereich der Entlüftungskammer 6 tritt das Gas aus der Flüssigkeit 2 durch die Wandungsabschnitte 10 aus hydrophobem Material, entsprechende hydrophobe Membranen, einer vorhandenen Druckdifferenz folgend aus und verläßt die Vorrichtung über die angedeuteten Gas-Strömungskanäle 16. Diese Abtrennung der Gasblasen erfolgt kontinuierlich aus der die Entlüftungskammern 6a, 6b durchströmenden Flüssigkeit 2.

Durch die Membranen, die die Filter 7, 11 bilden, kann auch eine Partikelfilterung erfolgen. Je nach Porengröße oder Kanalquerschnitt in den Filtern 7, 11 werden unterschiedliche Partikelgrößen abgetrennt.

Das erfindungsgemäße Verfahren und die erfindungsgemäße Vorrichtung lassen sich in gleicher Weise auch für ölbasierte Flüssigkeiten realisieren, sofern man statt der hydrophoben und hydrophilen Materialien entsprechende oleophobe und oleophile Materialien einsetzt. Entsprechende Flüssigkeiten wären auch beispielsweise Alkohole oder Harze, für die entsprechend passende Materialien gewählt werden könnten.

## Patentansprüche

1. Verfahren zum Separieren und Abführen von Gasblasen aus einer kontinuierlich strömenden Flüssigkeit (2), insbesondere in einem mikrofluidischen System,
bei dem die die Gasblasen enthaltende Flüssigkeit (2) auf dem Weg von einer Eintrittsstelle (1) zu einer Austrittsstelle (3) eine Entlüftungskammer (6) durchströmt,
wobei die Strömung der Flüssigkeit (2) an der Eintrittsstelle (1) und an der Austrittsstelle (3) zumindest im wesentlichen in die gleiche Achsrichtung verläuft,
wobei auf der Außenseite der Entlüftungskammer (6) ein niedrigerer Druck herrscht als in der Entlüftungskammer (6),
wobei die Entlüftungskammer (6) zumindest eine Wandung (9) oder einen Wandungsabschnitt (10) aus einem die Flüssigkeit (2) abstoßenden, für das Gas jedoch durchlässigen Gastrennmaterial aufweist,
wobei die Flüssigkeit (2) ausgangs der Entlüftungskammer (6) einen Austrittsfilter (7) durchströmt, der aus einem die Flüssigkeit (2) aufnehmenden, Poren oder kleine Kanäle bildenden Material besteht, und/oder die Flüssigkeit (2) eingangs der Entlüftungskammer (6) einen Eintrittsfilter (11) durchströmt, der aus einem die Flüssigkeit (2) aufnehmenden, Poren oder kleine Kanäle bildenden Material besteht,
wobei der Förderdruck der Flüssigkeit (2), der Durchflußwiderstand der Wandung (9) der Entlüftungskammer (6) aus Gastrennmaterial für das Gas und die Speicherwirkung des Filters (7, 11) oder der Filter (7, 11) aus einem die Flüssigkeit (2) aufnehmenden Material für die Flüssigkeit (2) so aufeinander abgestimmt sind, daß die in der Flüssigkeit (2) enthaltenen Gasblasen zu einem erheblichen Anteil durch die Wandung (9) nach außen entweichen,
wobei der Strömungsweg der Flüssigkeit (2) zwischen der Eintrittsstelle (1) und der Entlüftungskammer (6) und zwischen der Entlüftungskammer (6) und der Austrittsstelle (3) umgelenkt wird, so daß die Flüssigkeit (2) von der Achsrichtung zunächst radial nach außen in die Entlüftungskammer (6) und dann radial nach innen und zurück in die Achsrichtung umgelenkt wird, um lageunabhängig Gas aus der Flüssigkeit (2) durch das Gastrennmaterial hindurch separieren zu können,
**dadurch gekennzeichnet,**
**daß** die Flüssigkeit (2) durch den Eintrittsfilter (11) in die Entlüftungskammer (6) und dann durch den Austrittsfilters (7) strömt,
**daß** die Flüssigkeit (2) zwischen der Entlüftungskammer (6) und der Austrittsstelle (3) im Austrittsfilter (7) umgelenkt wird, und
**daß** die Flüssigkeit (2) den Austrittsfilter (7) und/oder den Eintrittsfilter (11) zumindest im wesentlichen radial durchströmt.

2. Verfahren nach Anspruch 1, **dadurch gekennzeichnet, daß** die Flüssigkeit (2) und/oder Gas in der Entlüftungskammer (6) zumindest abschnittsweise ringförmig strömen kann bzw. können.

3. Verfahren nach Anspruch 1 oder 2, **dadurch gekennzeichnet, daß** der Strömungsweg der Flüssigkeit (2) im Austrittsfilter (7) und/oder Eintrittsfilter (11) durch zumindest eine Wandung (9) oder einen Wandungsabschnitt (10) aus Gastrennmaterial begrenzt wird.

4. Verfahren nach einem der voranstehenden Ansprüche, **dadurch gekennzeichnet, daß** die Flüssigkeit (2) zwischen der Eintrittsstelle (1) und der Entlüftungskammer (6) im Eintrittsfilter (11) umgelenkt wird.

5. Verfahren nach einem der voranstehenden Ansprüche, **dadurch gekennzeichnet, daß** die Umlenkung des Strömungswegs in einem Winkel von etwa 90° erfolgt.

6. Verfahren nach einem der voranstehenden Ansprüche, **dadurch gekennzeichnet, daß** die Flüssigkeit (2) von der Achsrichtung aus radial nach außen in einer Mehrzahl von Richtungen, insbesondere strahlenförmig, und/oder umgekehrt radial nach innen strahlenförmig und dann in die Achsrichtung umgelenkt wird.

7. Verfahren nach einem der voranstehenden Ansprüche, **dadurch gekennzeichnet, daß** die Entlüftungskammer (6) radial außerhalb und umlaufend um den Austrittsfilter (7) und/oder den Eintrittsfilter (11) angeordnet ist.

8. Verfahren nach einem der voranstehenden Ansprüche, **dadurch gekennzeichnet, daß** die Eintrittsstelle (1) und die Austrittsstelle (3) axial miteinander fluchten.

9. Verfahren nach einem der voranstehenden Ansprüche, **dadurch gekennzeichnet, daß** die Flüssigkeit (2) zwei in Strömungsrichtung hintereinander angeordnete Entlüftungskammern (6a, 6b) durchströmt, die über eine lediglich eine Durchtrittsöffnung (12) oder einige Durchtrittsöffnungen (12) aufweisende Trennschicht (13) getrennt sind.

10. Verfahren nach einem der voranstehenden Ansprüche, **dadurch gekennzeichnet, daß** die Flüssigkeit (2)
an der Eintrittstelle (1) in der Achsrichtung in den Eintrittsfilter (11) eintritt, im Eintrittsfilter (11) strahlenförmig radial nach außen umgelenkt wird, radial in die den Eintrittsfilter (11) ringförmig umgebende erste Entlüftungskammer (6a) eintritt und diese durchströmt,
an einer Stelle oder an einigen Stellen axial in die den Austrittsfilter (7) ringförmige umgebende zweite Entlüftungskammer (6b) eintritt und diese durchströmt,
radial in den Austrittsfilter (7) eintritt,
im Austrittsfilter (7) wieder in die Achsrichtung umgelenkt wird und
an der Austrittsstelle (3) in der Achsrichtung aus dem Austrittsfilter (7) austritt.

11. Vorrichtung zum Separieren und Abführen von Gasblasen aus einer kontinuierlich strömenden Flüssigkeit (2), insbesondere in einem mikrofluidischen System,
mit einer Eintrittsstelle (1) für den Eintritt von Gasblasen enthaltender Flüssigkeit (2) und einer Austrittsstelle (3) für den Austritt der Flüssigkeit (2) aus der Vorrichtung,
mit einer Entlüftungskammer (6) in Strömungsrichtung der Flüssigkeit (2) hinter der Eintrittsstelle (1),
wobei auf der Außenseite der Entlüftungskammer (6) ein niedrigerer Druck herrscht als in der Entlüftungskammer (6),
wobei die Entlüftungskammer (6) von Wandungen (8, 9) begrenzt ist und zumindest eine Wandung (9) oder einen Wandungsabschnitt (10) aus einem die Flüssigkeit (2) abstoßenden, für das Gas jedoch durchlässigen Gastrennmaterial aufweist,
wobei in Strömungsrichtung der Flüssigkeit (2) ausgangs der Entlüftungskammer (6) und vor der Austrittsstelle (3) ein Austrittsfilter (7) angeordnet ist und/oder eingangs der Entlüftungskammer (6) ein Eintrittsfilter (11) angeordnet ist, durch den der Strömungsweg der Flüssigkeit (2) führt,
wobei der Austrittsfilter (7) und/oder der Eintrittsfilter (11) aus einem die Flüssigkeit (2) aufnehmenden, Poren oder kleine Kanäle bildenden Material besteht,
wobei der Förderdruck der Flüssigkeit (2), der Durchflußwiderstand der Wandung (9) bzw. des Wandungsabschnittes (10) der Entlüftungskammer (6) aus Gastrennmaterial für das Gas und die Speicherwirkung des oder der Filter (7, 11) für die Flüssigkeit (2) so aufeinander abgestimmt sind, daß die in der Flüssigkeit (2) enthaltenen Gasblasen zu einem erheblichen Anteil durch die Wandung (9) bzw. den Wandungsabschnitt (10) nach außen entweichen können,
wobei die Entlüftungskammer (6) ringförmig ausgebildet ist, um lageunabhängig Gas aus der Flüssigkeit (2) durch das Gastrennmaterial hindurch separieren zu können,
**dadurch gekennzeichnet,**
**daß** die bezüglich der Eintrittsstelle (1) radial außerhalb und umlaufend angeordnete Entlüftungskammer (6) stromab des Eintrittsfilters (11) und stromauf des Austrittsfilters (7) angeordnet ist, und
**daß** die Entlüftungskammer (6) den Austrittsfilter (7) und/oder den Eintrittsfilter (11) ringförmig umgibt.

12. Vorrichtung nach Anspruch 11, **dadurch gekennzeichnet, daß** die Strömung der Flüssigkeit (2) an der Eintrittsstelle (1) und an der Austrittsstelle (3) zumindest im wesentlichen in die gleiche Achsrichtung verläuft und daß der Strömungsweg der Flüssigkeit (2) zwischen der Eintrittsstelle (1) und der Entlüftungskammer (6) und zwischen der Entlüftungskammer (6) und der Austrittsstelle (3) umgelenkt wird, so daß die Flüssigkeit (2) von der Achsrichtung zunächst radial nach außen in die Entlüftungskammer (6) und dann radial nach innen und zurück in die Achsrichtung umgelenkt wird.

13. Vorrichtung nach Anspruch 11 oder 12, **dadurch gekennzeichnet, daß** die Wandung (9) oder der Wandungsabschnitt (10) aus Gastrennmaterial sich bis in den Bereich des Austrittsfilters (7) und/oder in den Bereich des Eintrittsfilters (11) erstreckt.

14. Vorrichtung nach einem der Ansprüche 11 bis 13, **dadurch gekennzeichnet, daß** die Eintrittsstelle (1) und/oder die Austrittsstelle (3) in Achsrichtung bzw. axial fluchtend angeordnet sind.

15. Vorrichtung nach einem der Ansprüche 11 bis 14, **dadurch gekennzeichnet, daß** zwischen der Eintrittsstelle (1) und der Austrittsstelle (3) zwei in Strömungsrichtung der Flüssigkeit (2) hintereinander angeordnete Entlüftungskammern (6a, 6b) vorgesehen sind, die über eine lediglich eine Durchtrittsöffnung (12) oder einige Durchtrittsöffnungen (12) aufweisende Trennschicht (13) voneinander getrennt sind.

16. Vorrichtung nach einem der Ansprüche 11 bis 15, **dadurch gekennzeichnet, daß** die Wandung (9) oder der Wandungsabschnitt (10) aus Gastrennmaterial als die Eintrittsstelle (1) und/oder die Austrittsstelle (3) aufweisende, vollflächige Scheibe ausgeführt ist.

17. Vorrichtung nach einem der Ansprüche 11 bis 16, **dadurch gekennzeichnet,**
**daß** die Vorrichtung ein Gehäuse (14), vorzugsweise aus Gehäusekorpus (14a) und Gehäusedeckel (14b), aus für Flüssigkeit (2) und Gas undurchlässigem Material aufweist,
**daß** im Gehäuse (14) Flüssigkeits-Strömungskanäle (15) und Gas-Strömungskanäle (16) ausgebildet sind und
**daß** Wandungsabschnitte (10) aus Gastrennmaterial als Einsätze an entsprechenden Stellen des Gehäuses (14) ausgeführt sind.

18. Vorrichtung nach Anspruch 17, **dadurch gekennzeichnet, daß** die entsprechenden Stellen des Gehäuses (14) als Ausnehmungen (17) ausgeführt sind.

19. Vorrichtung nach einem der Ansprüche 11 bis 18, **dadurch gekennzeichnet, daß** die Teile aus einem die Flüssigkeit (2) abstoßenden Material und/oder die Teile aus einem die Flüssigkeit aufnehmenden Material als Membranen ausgeführt sind.

20. Vorrichtung nach einem der Ansprüche 11 bis 19, **dadurch gekennzeichnet, daß** die Dicke der Teile aus einem die Flüssigkeit (2) abstoßenden Material zwischen 100 µm und 300 µm, vorzugsweise zwischen 200 µm und 250 µm beträgt.

21. Vorrichtung nach einem der Ansprüche 11 bis 20, **dadurch gekennzeichnet, daß** die Dicke der Teile aus einem die Flüssigkeit (2) aufnehmenden Material zwischen 200 µm und 500 µm, vorzugsweise zwischen 300 µm und 400 µm beträgt.

22. Vorrichtung nach einem der Ansprüche 11 bis 21, **dadurch gekennzeichnet, daß** der Austrittsfilter (7) und/oder der Eintrittsfilter (11) aus einem Sintermaterial, insbesondere einem Keramik-Sintermaterial, besteht bzw. bestehen.

## Claims

1. Method for the separation and discharge of gas bubbles from a continuously flowing liquid (2), particularly in a microfluidic system,
in which the liquid (2) containing the gas bubbles flows, on its way from an inlet point (1) to an outlet point (3), through a deaeration chamber (6),
the flow of the liquid (2) at the inlet point (1) and at the outlet point (3) running at least essentially in the same axial direction,
a lower pressure prevailing on the outside of the deaeration chamber (6) than in the deaeration chamber (6),
the deaeration chamber (6) having at least one wall (9) or one wall portion (10) consisting of a gas separation material which repels the liquid (2), but is permeable to the gas,
the liquid (2) flowing, at the exit of the deaeration chamber (6), through an outlet filter (7) which consists of a material absorbing the liquid (2) and forming pores or small ducts, and/or the liquid (2) flowing, at the entrance of the deaeration chamber (6), through an inlet filter (11) which consists of a material absorbing the liquid (2) and forming pores or small ducts,
the conveying pressure of the liquid (2), the throughflow resistance of the wall (9) of the deaeration chamber (6) composed of gas separation material for the gas and the storage action of the filter (7, 11) or the filter (7, 11) composed of a liquid (2)-absorbing material for the liquid (2) being coordinated with one another such that a considerable amount of the gas bubbles contained in the liquid (2) escape outwards through the wall (9),
the flow path of the liquid (2) between the inlet point (1) and the deaeration chamber (6) and between the deaeration chamber (6) and the outlet point (3) being deflected, so that the liquid (2) is deflected from the axial direction first radially outwards into the deaeration chamber (6) and then radially inwards and back into the axial direction, so that gas can be separated from the liquid (2) through the gas separation material in a positionally independent way, **characterized in**
**that** the liquid (2) flows through the inlet filter (11) into the deaeration chamber (6) and then through the outlet filter (7),
**that** the liquid (2) is deflected between the deaeration chamber (6) and the outlet point (3) in the outlet filter (7), and
**that** the liquid (2) flows at least essentially radially through the outlet filter (7) and/or the inlet filter (11),

2. Method according to Claim 1, **characterized in that** the liquid (2) and/or gas can flow at least partially annularly in the deaeration chamber (6).

3. Method according to Claim 1 or 2, **characterized in that** the flow path of the liquid (2) in the outlet filter (7) and/or inlet filter (11) is delimited by at least one wall (9) or one wall portion (10) composed of gas separation material.

4. Method according to one of the preceding claims, **characterized in that** the liquid (2) is deflected between the inlet point (1) and the deaeration chamber (6) in the inlet filter (11).

5. Method according to one of the preceding claims, **characterized in that** the deflection of the flow path takes place at an angle of about 90°.

6. Method according to one of the preceding claims, **characterized in that** the liquid (2) is deflected from the axial direction radially outwards in a plurality of directions, in particular in a radiating manner, and/or, conversely, radially inwards in a radiating manner and then into the axial direction,

7. Method according to one of the preceding claims, **characterized in that** the deaeration chamber (6) is arranged radially outside and peripherally around the outlet filter (7) and/or the inlet filter (11).

8. Method according to one of the preceding claims, **characterized in that** the inlet point (1) and the outlet point (3) are axially in alignment with one another.

9. Method according to one of the preceding claims, **characterized in that** the liquid (2) flows through two deaeration chambers (6a, 6b) which are arranged one behind the other in the flow direction and which are separated via a separating layer (13) having only one passage orifice (12) or a few passage orifices (12).

10. Method according to one of the preceding claims, **characterized in that** the liquid (2)
enters the inlet filter (11) at the inlet point (1) in the axial direction, is deflected radially outwards in a radiating manner in the inlet filter (11), radially enters the first deaeration chamber (6a) annularly surrounding the inlet filter (11) and flows through the said deaeration chamber,
enters the second deaeration chamber (6b), annularly surrounding the outlet filter (7), axially at one point or at a few points and flows through the said deaeration chamber,
enters the outlet filter (7) radially,
is deflected into the axial direction again in the outlet filter (7) and
emerges from the outlet filter (7) in the axial direction of the outlet point (3).

11. Apparatus for the separation and discharge of gas bubbles from a continuously flowing liquid (2), particularly in a microfluidic system,
with an inlet point (1) for the inlet of the liquid (2) containing gas bubbles and with an outlet point (3) for the outlet of the liquid (2) from the apparatus,
with a deaeration chamber (6) downstream of the inlet point (1) in the flow direction of the liquid (2),
a lower pressure prevailing on the outside of the deaeration chamber (6) than in the deaeration chamber (6),
the deaeration chamber (6) being delimited by walls (8, 9), and at least one wall (9) or one wall portion (10) consisting of a gas separation material which repels the liquid (2), but is permeable to the gas,
an outlet filter (7) being arranged at the exit of the deaeration chamber (6) and upstream of the outlet point (3) in the flow direction of the liquid (2), and/or an inlet filter (11), through which the flow path of the liquid (2) leads, being arranged at the entrance of the deaeration chamber (6),
the outlet filter (7) and/or the inlet filter (11) consisting of a material absorbing the liquid (2) and forming pores or small ducts,
the conveying pressure of the liquid (2), the throughflow resistance of the wall (9) or of the wall portion (10) of the deaeration chamber (6) composed of gas separation material for the gas and the storage action of the filter or filters (7, 11) for the liquid (2) being coordinated with one another such that a considerable amount of the gas bubbles contained in the liquid (2) can escape outwards through the wall (9) or the wall portion (10),
the deaeration chamber (6) being of annular design so that gas can be separated from the liquid (2) through the gas separation material in a positionally independent way,
**characterized in**
**that** the deaeration chamber (6) arranged radially on the outside and peripherally with respect to the inlet point (1) is arranged downstream of the inlet filter (11) and upstream of the outlet filter (7), and
**that** the deaeration chamber (6) surrounds the outlet filter (7) and/or the inlet filter (11) annularly.

12. Apparatus according to Claim 11, **characterized in that** the flow of the fluid (2) at the inlet point (1) and at the outlet point (3) runs at least essentially in the same axial direction, and **in that** the flow path of the liquid (2) between the inlet point (1) and the deaeration chamber (6) and between the deaeration chamber (6) and the outlet point (3) is deflected, so that the liquid (2) is deflected from the axial direction first radially outwards into the deaeration chamber (6) and then radially inwards and back into the axial direction.

13. Apparatus according to Claim 11 or 12, **characterized in that** the wall (9) or wall portion (10) composed of gas separation material extends into the region of the outlet filter (7) and/or into the region of the inlet filter (11).

14. Apparatus according to one of Claims 11 to 13, **characterized in that** the inlet point (1) and/or the outlet point (3) are arranged in alignment in the axial direction or axially.

15. Apparatus according to one of Claims 11 to 14, **characterized in that** two deaeration chambers (6a, 6b) are provided which are arranged one behind the other in the flow direction of the liquid (2) between the inlet point (1) and the outlet point (3) and which are separated from one another via a separating layer (13) having only one passage orifice (12) or a few passage orifices (12).

16. Apparatus according to one of Claims 11 to 15, **characterized in that** the wall (9) or wall portion (10) composed of gas separation material is designed as a full-surface disc having the inlet point (1) and/or the outlet point (3).

17. Apparatus according to one of Claims 11 to 16, **characterized in that** the apparatus has a housing (14), preferably composed of a housing body (14a) and a housing cover (14b), consisting of material impermeable to liquid (2) and gas,
**in that** liquid flow ducts (15) and gas flow ducts (16) are formed in the housing (14), and
**in that** wall portions (10) composed of gas separation material are designed as inserts at appropriate points of the housing (14).

18. Apparatus according to Claim 17, **characterized in that** the appropriate points of the housing (14) are designed as recesses (17).

19. Apparatus according to one of Claims 11 to 18, **characterized in that** the parts consisting of a material repelling the liquid (2) and/or the parts consisting of a material absorbing the liquid are designed as membranes.

20. Apparatus according to one of Claims 11 to 19, **characterized in that** the thickness of the parts consisting of a material repelling the liquid (2) amounts to between 100 µm and 300 µm, preferably to between 200 µm and 250 µm.

21. Apparatus according to one of Claims 11 to 20, **characterized in that** the thickness of the parts consisting of a material absorbing the liquid (2) amounts to between 200 µm and 500 µm, preferably to between 300 µm and 400 µm.

22. Apparatus according to one of Claims 11 to 21, **characterized in that** the outlet filter (7) and/or the inlet filter (11) consist/consists of a sintered material, particularly of a ceramic sintered material.

## Revendications

1. Procédé de séparation et d'évacuation de bulles de gaz contenues dans un liquide (2) qui s'écoule en continu, en particulier dans un système microfluide, dans lequel le liquide (2) qui contient des bulles de gaz traverse une chambre de désaération (6) sur son parcours entre un emplacement d'entrée (1) et un emplacement de sortie (3),
l'écoulement de liquide (2) s'étendant essentiellement dans la même direction axiale à l'emplacement d'entrée (1) et à l'emplacement de sortie (3),
une pression plus basse régnant sur le côté extérieur de la chambre de désaération (6) que dans la chambre de désaération (6),
la chambre de désaération (6) présentant au moins une paroi (9) ou une partie de paroi (10) en un matériau de séparation des gaz, qui repousse le liquide (2) mais laisse passer le gaz,
le liquide (2) traversant à la sortie de la chambre de désaération (6) un filtre de sortie (7) qui est constitué d'un matériau qui reprend le liquide (2) et qui forme des pores ou de petits canaux, et/ou le liquide (2) traversant à l'entrée de la chambre de désaération (6) un filtre d'entrée (11) constitué d'un matériau qui reprend le liquide (2) et qui forme des pores ou de petits canaux,
la pression de transport du liquide (2), la résistance au passage du gaz de la paroi (9) de la chambre de désaération (6) en matériau de séparation de gaz et l'effet d'accumulation de liquide (2) par le filtre (7, 11) ou les filtres (7, 11) en un matériau qui reprend le liquide (2) étant accordés mutuellement de telle sorte qu'une partie importante des bulles de gaz que contient le liquide (2) s'échappe vers l'extérieur à travers la paroi (9),
le parcours d'écoulement du liquide (2) entre l'emplacement d'entrée (1) et la chambre de désaération (6) et entre la chambre de désaération (6) et l'emplacement de sortie (3) étant dévié de telle sorte que le liquide (2) soit dévié de la direction axiale d'abord radialement vers l'extérieur dans la chambre de désaération (6) et ensuite radialement vers l'intérieur et de là dans la direction axiale, pour que le gaz puisse être séparé du liquide (2) à travers le matériau de séparation de gaz de manière indépendante de la position,
**caractérisé en ce que**
le liquide (2) pénètre dans la chambre de désaération (6) à travers le filtre d'entrée (11) et traverse ensuite le filtre de sortie (7),
**en ce qu'**entre la chambre de désaération (6) et l'emplacement de sortie (3), le liquide (2) est dévié dans le filtre de sortie (7) et
**en ce que** le liquide (2) traverse le filtre de sortie (7) et/ou le filtre d'entrée (11) au moins essentiellement radialement.

2. Procédé selon la revendication 1, **caractérisé en ce que** le liquide (2) et/ou le gaz peuvent s'écouler au moins en partie en anneau dans la chambre de désaération (6).

3. Procédé selon la revendication 1 ou 2, **caractérisé en ce que** le parcours d'écoulement de liquide (2) dans le filtre de sortie (7) et/ou dans le filtre d'entrée (11) est délimité par au moins une paroi (9) ou une partie de paroi (10) en matériau de séparation de gaz.

4. Procédé selon l'une des revendications précédentes, **caractérisé en ce qu'**entre l'emplacement d'entrée (1) et la chambre de désaération (6), le liquide (2) est dévié dans le filtre d'entrée (11).

5. Procédé selon l'une des revendications précédentes, **caractérisé en ce que** la déviation du parcours d'écoulement s'effectue sous un angle d'environ 90°.

6. Procédé selon l'une des revendications précédentes, **caractérisé en ce que** le liquide (2) est dévié de la direction axiale en plusieurs directions orientées radialement vers l'extérieur, en particulier en forme de faisceaux, et/ou est dévié radialement vers l'intérieur en forme de faisceaux pour ensuite être ramené dans la direction axiale.

7. Procédé selon l'une des revendications précédentes, **caractérisé en ce que** la chambre de désaération (6) est disposée radialement à l'extérieur et autour du filtre de sortie (7) et/ou du filtre d'entrée (11),

8. Procédé selon l'une des revendications précédentes, **caractérisé en ce que** l'emplacement d'entrée (1) et l'emplacement de sortie (3) sont alignés axialement l'un sur l'autre.

9. Procédé selon l'une des revendications précédentes, **caractérisé en ce que** le liquide (2) traverse deux chambres de désaération (6a, 6b) disposées l'une à la suite de l'autre dans la direction d'écoulement et séparées par une couche de séparation (13) qui présente une seule ouverture de passage (12) ou quelques ouvertures de passage (12).

10. Procédé selon l'une des revendications précédentes, **caractérisé en ce qu'**à l'emplacement d'entrée (1), le liquide (2) pénètre dans la direction axiale dans le filtre d'entrée (11),
**en ce que** dans le filtre d'entrée (11), il est dévié radialement vers l'extérieur en forme de faisceaux pour pénétrer radialement dans la première chambre de désaération (6a) qui entoure en anneau le filtre d'entrée (11) et traverser cette dernière,
**en ce qu'**en un emplacement ou en certains emplacements, il pénètre axialement dans la deuxième chambre de désaération (6b) qui entoure en anneau le filtre de sortie (7) et traverse cette dernière,
**en ce qu'**il pénètre radialement dans le filtre de sortie (7),
**en ce que** dans le filtre de sortie (7), il est de nouveau dévié dans la direction axiale et
**en ce qu'**à l'emplacement de sortie (3), il sort du filtre de sortie (7) dans la direction axiale.

11. Dispositif de séparation et d'évacuation de bulles de gaz contenues dans un liquide (2) qui s'écoule en continu, en particulier dans un système microfluide,
le dispositif présentant
un emplacement d'entrée (1) qui permet l'entrée du liquide (2) contenant des bulles de gaz et un emplacement de sortie (3) qui permet la sortie du liquide (2) hors du dispositif,
une chambre de désaération (6) disposée en aval de l'emplacement d'entrée (1) dans la direction d'écoulement du liquide (2),
la pression qui règne sur le côté extérieur de la chambre de désaération (6) étant inférieure à celle qui règne dans la chambre de désaération (6),
la chambre de désaération (6) étant délimitée par des parois (8, 9) et présentant au moins une paroi (9) ou une partie de paroi (10) en un matériau de séparation de gaz qui repousse le liquide (2) mais qui est perméable aux gaz,
un filtre de sortie (7) étant disposé à l'extérieur de la chambre de désaération (6) et en amont de l'emplacement de sortie (3) dans la direction d'écoulement de liquide (2) et/ou un filtre d'entrée (11) à travers lequel le parcours d'écoulement conduit le liquide (2) étant disposé à l'entrée de la chambre de désaération (6),
le filtre de sortie (7) et/ou le filtre d'entrée (11) étant constitués d'un matériau qui reprend le liquide (2) et qui forme des pores ou de petits canaux,
la pression de transport de liquide (2), la résistance au passage du gaz de la paroi (9) ou de la partie de paroi (10) de la chambre de désaération (6) en matériau de séparation de gaz et l'effet d'accumulation du liquide (2) par le ou les filtres (7, 11) étant accordés mutuellement de telle sorte qu'une partie importante des bulles de gaz que contient le liquide (2) puisse s'échapper vers l'extérieur à travers la paroi (9) ou la partie de paroi (10),
la chambre de désaération (6) ayant une forme annulaire pour que le gaz puisse être séparé du liquide (2) par l'intermédiaire du matériau de séparation de gaz indépendamment de la position,
**caractérisé en ce que**
la chambre de désaération (6) disposée radialement à l'extérieur de l'emplacement d'entrée (1) et à la périphérie est disposée en aval du filtre d'entrée (11) et en amont du filtre de sortie (7) et
**en ce que** la chambre de désaération (6) entoure en anneau le filtre de sortie (7) et/ou le filtre d'entrée (11).

12. Dispositif selon la revendication 11, **caractérisé en ce que** l'écoulement de liquide (2) s'étend au moins essentiellement dans la même direction axiale à l'emplacement d'entrée (1) et à l'emplacement de sortie (3) et **en ce que** le parcours d'écoulement de liquide (2) est dévié entre l'emplacement d'entrée (1) et la chambre de désaération (6) et entre la chambre de désaération (6) et l'emplacement de sortie (3) de telle sorte que le liquide (2) est dévié d'abord radialement vers l'extérieur par rapport à la direction axiale dans la chambre de désaération (6) et ensuite radialement vers l'intérieur avant d'être ramené dans la direction axiale.

13. Dispositif selon la revendication 11 ou 12, **caractérisé en ce que** la paroi (9) ou la partie de paroi (10) en matériau de séparation de gaz s'étend jusqu'au niveau du filtre de sortie (7) et/ou jusqu'au niveau du filtre d'entrée (11).

14. Dispositif selon l'une des revendications 11 à 13, **caractérisé en ce que** l'emplacement d'entrée (1) et/ou l'emplacement de sortie (3) sont disposés dans la direction axiale ou sont alignés axialement.

15. Dispositif selon l'une des revendications 11 à 14, **caractérisé en ce qu'**entre l'emplacement d'entrée (1) et l'emplacement de sortie (3), deux chambres de désaération (6a, 6b) séparées l'une de l'autre par une couche de séparation (13) qui présente une seule ouverture de passage (12) ou quelques ouvertures de passage (12) sont prévues l'une à la suite de l'autre dans la direction d'écoulement du liquide (2).

16. Dispositif selon l'une des revendications 1 à 15, **caractérisé en ce que** la paroi (9) ou la partie de paroi (10) en matériau de séparation de gaz sont réalisées sous la forme d'un disque de pleine surface qui présente l'emplacement d'entrée (1) et/ou l'emplacement de sortie (3).

17. Dispositif selon l'une des revendications 11 à 16, **caractérisé en ce que** le dispositif présente un boîtier (14), de préférence constitué d'un corps de boîtier (14a) et d'un couvercle de boîtier (14b), en un matériau imperméable aux liquides (2) et aux gaz,
**en ce que** des canaux (15) d'écoulement de liquide et des canaux (16) d'écoulement de gaz sont formés dans le boîtier (14) et
**en ce que** les parties de paroi (10) en matériau de séparation de gaz sont réalisées sous la forme de garnitures disposées en des emplacements appropriés dans le boîtier (14).

18. Dispositif selon la revendication 17, **caractérisé en ce que** les emplacements appropriés du boîtier (14) sont configurés commue découpes (17).

19. Dispositif selon l'une des revendications 11 à 18, **caractérisé en ce que** les parties en un matériau qui repousse le liquide (2) et/ou les parties en un matériau qui reprend le liquide sont configurées sous la forme de membranes.

20. Dispositif selon l'une des revendications 11 à 19, **caractérisé en ce que** l'épaisseur des parties en matériau repoussant le liquide (2) est comprise entre 100 µm et 300 µm et de préférence entre 200 µm et 250 µm.

21. Dispositif selon l'une des revendications 11 à 20, **caractérisé en ce que** l'épaisseur des parties en un matériau qui reprend le liquide (2) est comprise entre 200 µm et 500 µm et de préférence entre 300 µm et 400 µm.

22. Dispositif selon l'une des revendications 11 à 21, **caractérisé en ce que** le filtre de sortie (7) et/ou le filtre d'entrée (11) sont constitués d'un matériau fritté et en particulier d'un matériau céramique fritté.
